Europäisches Patentamt

European Patent Office

Office européen des brevets

(11) Numéro de publication: **0 147 320**
**A2**

# (12) DEMANDE DE BREVET EUROPEEN

(21) Numéro de dépôt: **84402688.0**

(22) Date de dépôt: **21.12.84**

(51) Int. Cl.⁴: **B 01 D 19/00**

(30) Priorité: **23.12.83 FR 8320676**

(43) Date de publication de la demande:
**03.07.85 Bulletin 85/27**

(84) Etats contractants désignés:
**AT BE CH DE GB IT LI NL SE**

(71) Demandeur: **CREUSOT-LOIRE**
**42 rue d'Anjou**
**F-75008 Paris(FR)**

(72) Inventeur: **Pere, Gérard**
**6 rue d'Essertenne**
**F-71670 Le Breuil(FR)**

(74) Mandataire: **Polus, Camille et al,**
**c/o Cabinet Lavoix 2, Place d'Estienne d'Orves**
**F-75441 Paris Cedex 09(FR)**

(54) **Dispositif de dégazage.**

(57) Dégazeur destiné à équiper une installation d'électrolyse, en particulier une installation d'électrolyse de l'eau sous pression destinée à la production industrielle d'hydrogène et d'oxygène.

Le dégazeur comporte une enceinte verticale tubulaire (1) contenant une pile (13) de plateaux annulaires (14) simplement posés l'un sur l'autre et délimitant des compartiments de dégazage (23). Le liquide à dégazer est alimenté par une conduite (8) se trouvant à la partie supérieure de l'enceinte, et le liquide dégazé sort par un orifice (9) se trouvant à la partie inférieure de cette enceinte.

EP 0 147 320 A2

./...

Croydon Printing Company Ltd

Fig.1

## Dispositif de dégazage

La présente invention se rapporte à un dégazeur destiné à équiper une installation d'électrolyse, en particulier une installation d'électrolyse de l'eau sous pression destinée à la production industrielle d'hydrogène et/ou d'oxygène.

Une installation industrielle d'électrolyse de l'eau sous pression, par exemple une installation telle que décrite dans le brevet français n° 1.151.507, utilise d'une part un dégazeur relié à la sortie d'anolyte de l'électrolyseur et d'autre part un dégazeur relié à la sortie de catholyte. Le premier de ces dégazeurs extrait les bulles de gaz Oxygène du liquide électrolytique sortant de l'électrolyseur du côté des compartiments anodiques, et le second de ces dégazeurs extrait les bulles de gaz Hydrogène du liquide électrolytique sortant de l'électrolyseur du côté des compartiments cathodiques.

Les liquides électrolytiques dégazés sortant de ces deux dégazeurs sont alors remélangés, et le mélange obtenu est réinjecté dans l'électrolyseur. Le liquide électrolytique circule donc continûment et en circuit fermé dans l'installation d'électrolyse, son débit étant fixé en fonction du rendement de l'installation. Les dégazeurs doivent effectuer un dégazage poussé, non seulement pour obtenir un rendement maximal, mais encore pour éviter, après le remélange des liquides dégazés, la formation, même minime, d'un mélange dangereusement explosif de bulles de gaz Hydrogène et Oxygène.-

On utilise dans ces dégazeurs le principe du dégazage par montée progressive des bulles de gaz à la surface du liquide. Le dégazage consiste à introduire le liquide chargé de bulles de gaz dans un récipient dans lequel il se crée alors une interface liquide-gaz, et à attendre que ces bulles de gaz montent jusqu'à cette interface. Elles sont alors piégées par le volume gazeux se trouvant au-dessus de cette interface et ne peuvent plus réintégrer le volume de liquide se trouvant en-dessous de celle-ci. Le dégazage est donc d'autant plus poussé que le liquide à dégazer séjourne plus longtemps dans le dégazeur, et que l'interface liquide-gaz est plus grande.

Dans le cas d'une installation d'électrolyse telle que ci-dessus définie, le liquide électrolytique circule continûment à débit constant, et ne peut donc stagner dans le dégazeur. Pour obtenir un dégazage poussé, on diminue au maximum la vitesse de propagation du liquide dans le dégazeur en augmentant le plus possible sa section de passage, et on augmente le plus possible l'interface liquide-gaz.

Une solution avantageuse pour augmenter l'interface liquide-gaz fait l'objet du brevet français 2.448.378 de la demanderesse. Un dégazeur selon ce brevet français comporte une enceinte pressurisée démontable, munie d'une entrée amont pour le liquide électrolytique chargé de gaz, d'une sortie aval pour le liquide dégazé, et d'une sortie supérieure pour le gaz extrait. Cette enceinte contient, en retrait par rapport à sa paroi intérieure, une ou plusieurs piles de plateaux agencés de manière à former des compartiments superposés, chaque pile étant immergée dans le liquide électrolytique, et chaque compartiment étant muni d'un orifice amont d'entrée de liquide chargé de gaz et d'un orifice aval de sortie de liquide dégazé. Etant donné qu'il se crée nécessairement une interface liquide-gaz dans chaque compartiment, l'interface totale liquide-gaz se trouve notablement augmentée pour une section de passage du liquide, donc une vitesse d'écoulement de celui-ci, très peu inférieure à celle du dégazeur qui ne comporterait que ladite enceinte garnie de ses orifices d'entrée de liquide à dégazer et de sortie de liquide dégazé d'une part et de gaz d'autre part.

Comme on l'a mentionné précédemment, la vitesse de propagation du liquide électrolytique est plus faible dans le dégazeur que dans le reste du circuit. Cette faible vitesse favorise le phénomène de dégazage, mais favorise par contre aussi la décantation des impuretés de toutes sortes. Il faut donc démonter et nettoyer régulièrement l'intérieur du dégazeur, en particulier bien nettoyer chaque compartiment. Ce nettoyage est très malaisé car il nécessite de passer de longues tiges dans chaque compartiment par les orifices disponibles, ces compartiments étant de faible hauteur (quelques centimètres) et de grande longueur (plusieurs mètres).

L'invention se rapporte à un dégazeur du type tel que ci-dessus défini, mais entièrement et aisément démontable, et par suite facilement nettoyable. Ses compartiments sont de fabrication simple et donc peu onéreuse. Au lieu d'être fabriqués à l'aide de longues tôles planes, donc peu rigides, les compartiments du dégazeur de l'invention sont formés par un simple empilage sans soudure d'éléments pouvant être galbés, donc très rigides, et de relativement faibles dimensions. Par ailleurs, ce dégazeur peut être aisément construit sous forme de haut tube vertical, ce qui est peu banal pour un dégazeur, et présente l'avantage non seulement de nécessiter un faible encombrement horizontal, mais encore de faire jouer au dégazeur également le rôle de vase d'expansion pour l'installation.

L'invention se rapporte donc à un dégazeur à compartiments tel que ci-dessus défini. Il est caractérisé en ce que chaque pile de compartiments est constituée, à la manière d'une pile d'assiettes, de plateaux séparables posés l'un sur l'autre, chaque plateau étant percé d'un trou central de manière à ce que la pile, une fois constituée, soit percée d'un canal vertical la traversant axialement du haut en bas, et chaque plateau étant par ailleurs muni de rebords laissant pour chaque compartiment au moins une ouverture périphérique vers l'extérieur et au moins une ouverture centrale dans ledit canal, le dégazeur étant équipé de moyens pour faire circuler du liquide électrolytique, dans chaque compartiment, entre au moins une ouverture périphérique et au moins une ouverture centrale, ou vice-versa.

L'invention sera mieux comprise à l'aide de la description suivante d'un exemple, préférentiel mais non limitatif, de dégazeur conforme à l'invention, en référence aux dessins annexés dans lesquels :

- la figure 1 est une vue d'ensemble schématique du dégazeur de l'invention,

- la figure 2 est une vue plus détaillée d'une portion du dégazeur de la figure 1,

- la figure 3 est une vue par le dessous, en perspective partiellement coupée, d'un des nombreux plateaux équipant le dégazeur de la figure 1.

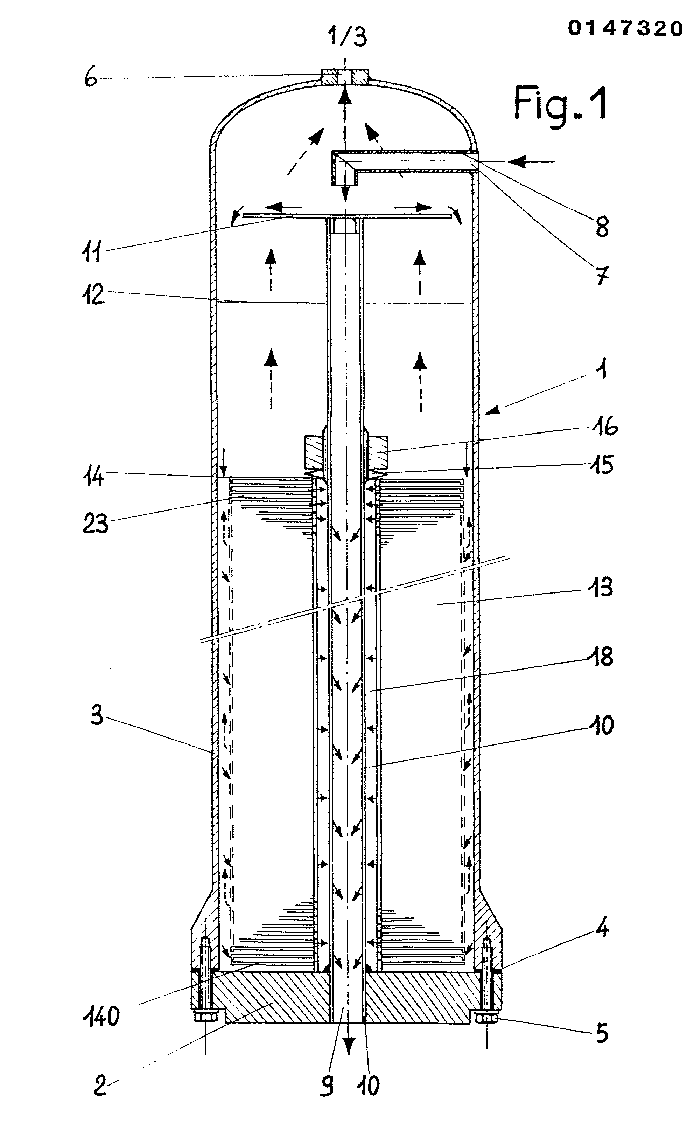

En se reportant tout d'abord à la figure 1, le dégazeur de l'invention se présente extérieurement sous la forme d'un haut tube cylindrique placé en position verticale. Il comporte une enceinte pressurisée 1 composée d'un socle horizontal 2 et d'une partie cylindrique 3, amovible par soulèvement, fermée à son extrémité supérieure et reposant, par sa base ouverte, sur le socle 2 par l'intermédiaire d'un joint d'étanchéité 4. Le tube 3 est serré sur le socle 2 à l'aide de vis 5.

Comme on le voit sur le dessin, l'enceinte est reliée à l'installation d'électrolyse de l'eau sous pression, non représentée, par trois ouvertures :

- une ouverture supérieure 6 d'évacuation du gaz extrait du dégazeur connectée, par une conduite non représentée, à un dispositif de lavage de gaz,

- une ouverture latérale 7, située à la partie supérieure du tube 3, par où arrive le liquide électrolytique chargé de bulles de gaz, en provenance d'une des deux sorties de l'électrolyseur ; dans l'enceinte 1, ce mélange liquide-gaz est déversé axialement grâce à une conduite coudée 8,

- une ouverture inférieure 9, percée dans le socle 2, par où sort le liquide dégazé pour être ensuite réintroduit aux entrées de l'électrolyseur après avoir passé, entre autres, dans un filtre et un circuit réfrigérant.

Le liquide dégazé sort en 9 par un long tube 10, dont le rôle sera explicité ultérieurement. Ce tube 10, qui est soudé au socle 2, s'étend le long de l'axe de l'enceinte tubulaire 1, et s'arrête juste en-dessous l'orifice de sortie dans l'enceinte de la conduite coudée 8, comme on le voit sur le dessin. Il porte à cet endroit une plaque déflectrice 11, circulaire et horizontale, vissée de manière à pouvoir être retirée aisément par le haut une fois la partie cylindrique 3 de l'enceinte 1 retirée. Comme représenté par les flèches en traits pleins, qui figurent le trajet du liquide électrolytique, le liquide entrant en 7 tombe sur le déflecteur horizontal 11, s'écoule vers ses bords, puis poursuit sa course vers le bas à l'intérieur de l'enceinte 1, selon le trajet qui sera décrit ultérieurement. L'enceinte 1 est remplie de liquide, dont le niveau moyen se situe en 12, entre la plaque déflectrice 11 et la pile de compartiments 13 que l'on décrira ultérieurement. Le niveau 12 correspond au niveau maximum de liquide dans l'installation d'électrolyse de sorte que, conformément à un aspect très intéressant de l'invention, l'enceinte 1 sert également de vase d'expansion pour l'installation. L'enceinte étant tubulaire et verticale, les variations du niveau 12 sont relativement importantes en fonction des variations de pression, de sorte qu'il est aisé, si on le désire, d'effectuer une régulation de pression à partir d'un dispositif de détection, non représenté, du niveau 12.

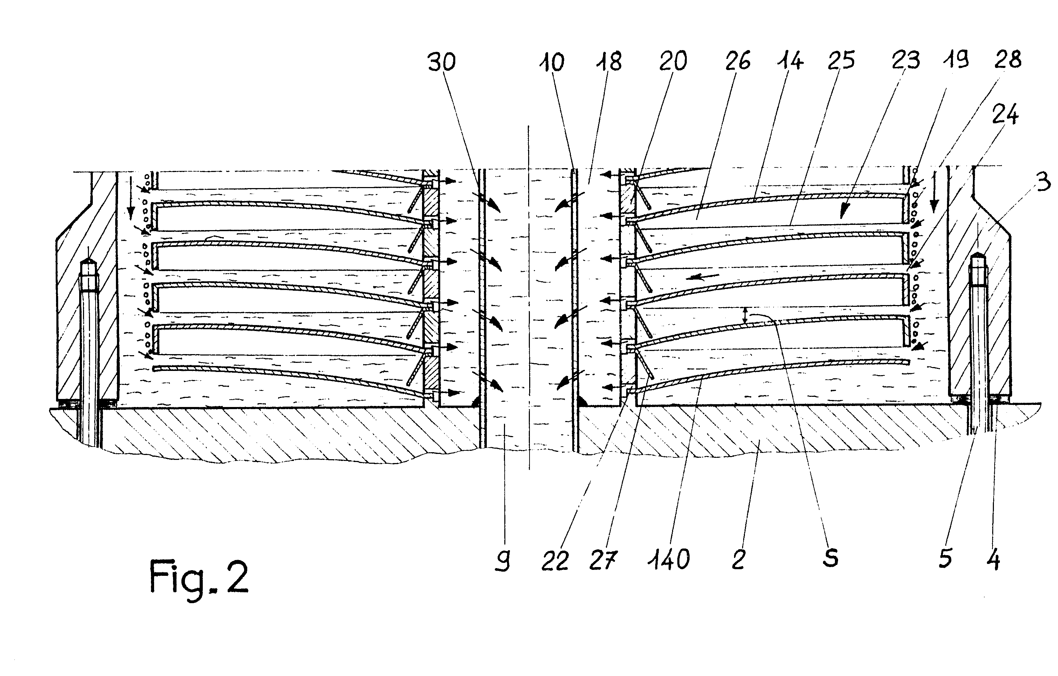

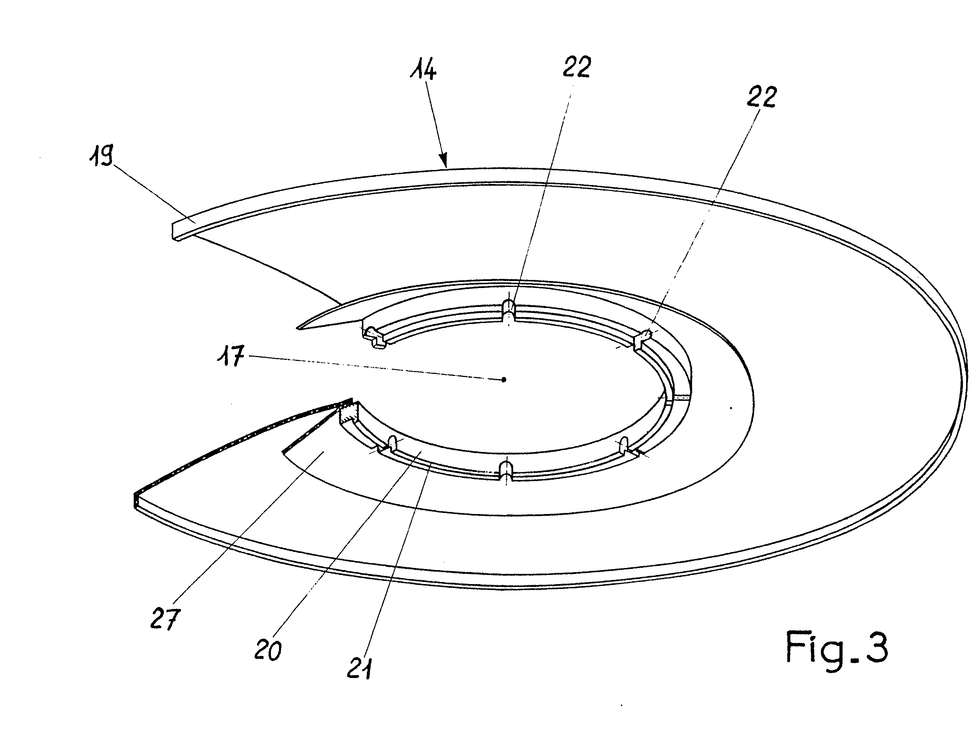

En se reportant maintenant également aux figures 2 et 3, l'enceinte comporte, en dessous de la valeur minimale du niveau 12, une pile 13 de plateaux annulaires 14 identiques, formant une série de compartiments de dégazage superposés 23, selon le moyen général du brevet français 2.448.378.

La pile 13 est formée par un simple empilage des plateaux 14, dont l'un d'eux est représenté en perspective sur la figure 3, les plateaux étant posés l'un sur l'autre à la manière d'une pile d'assiettes comme on le voit sur la figure 2. Dans l'enceinte 1, l'empilage 13 est maintenu en place et serré sur le socle 2 par l'intermédiaire d'un joint élastique 15 et d'un écrou 16 se vissant sur le tube 10. On peut donc enlever les plateaux 14 un par un après avoir retiré le tube 3 par soulèvement, dévissé et retiré la plaque 11, puis dévissé et retiré l'écrou 16 et le joint 15. Les plateaux 14, étant annulaires, sont percés d'un trou central 17, de sorte que l'empilement 13 est garni d'un canal axial 18 entourant le tube 10.

Comme on le voit sur les figures 2 et 3, chaque plateau 14 est muni d'un rebord périphérique 19 et d'un rebord central 20. Le rebord 20 est muni d'un épaulement 21 permettant le centrage correct des plateaux l'un sur l'autre et est percé de canaux 22 destinés à permettre le passage du liquide de chaque compartiment 23, formé entre deux plateaux 14, vers le canal central 18. Le rebord extérieur 19 est de hauteur inférieure à celle du
rebord intérieur 20, de manière à définir, pour chaque compartiment 23, une
ouverture circulaire périphérique 24 par où d'une part le liquide chargé de
gaz entre dans le compartiment 23, et par où d'autre part les bulles de gaz
s'en échappent en direction de la surface 12, comme on le voit sur la figure 2 où les bulles de gaz sont matérialisées et sur la figure 1 où le trajet du gaz est représenté par des flèches en pointillés.

Conformément au moyen général du brevet français 2.448.378, le niveau 25 du liquide s'établit dans chaque compartiment 23 à hauteur de la
partie supérieure de l'ouverture périphérique 24. Au-dessus de ce niveau se
forme, dans chaque compartiment, une poche de gaz 26, dont de grosses bulles 28 s'échappent continûment vers le haut par l'ouverture 24 au fur et à
mesure que le processus de dégazage se poursuit dans le compartiment 23.

Le liquide dégazé passe du fond de chaque compartiment 23 vers le
canal 18 par les trous radiaux 22. Afin d'éviter une aspiration du gaz de
la poche 26 dans les canaux 22, ce qui reformerait le mélange liquide-gaz,
chaque plateau comporte un déflecteur tronconique 27 placé autour du rebord
intérieur 20 comme représenté sur les dessins.

Dans l'exemple de réalisation représenté, le plateau inférieur
140 ne comporte ni rebord extérieur 19, ni orifices de passage centraux 22.

Selon une caractéristique particulièrement avantageuse de l'invention, chaque plateau 14 a une forme galbée avec concavité dirigée vers le
bas, ce qui lui confère une très grande rigidité, sa courbure dans le sens
radial (figure 2) étant telle que la section S de passage radial du liquide
dans le compartiment 23 soit constante. Un calcul élémentaire montre que
cette courbure correspond alors à une portion d'hyperbole de la forme :

$$x.y = \text{constante},$$

la constante étant déterminée aisément par la valeur connue de la section
de l'ouverture d'entrée 24 par exemple.

La section de passage étant maintenue constante, et le débit
étant fixé, le liquide avance radialement à vitesse constante dans le compartiment 23, ce qui évite la formation de remous nocifs au processus de dégazage. Les bulles de gaz ne peuvent en effet monter à la surface que si
elles ne sont pas entraînées ailleurs par des courants parcourant le liquide.

Dans le même esprit, le liquide injecté dans le canal 18 par les orifices 22 ne passe pas directement dans l'orifice 9 de sortie de dégazeur car, la vitesse de préparation du liquide dans le canal central augmentant progressivement de haut en bas, il se produirait, à travers les canaux radiaux 22, un phénomène d'aspiration de plus en plus intense du haut vers le bas, ce qui provoquerait des remous dans les compartiments. Pour éviter ce phénomène, on utilise un tube central 10 percé d'orifices 30 dont le nombre et/ou le diamètre diminue de haut en bas. Par ailleurs, comme on le voit sur la figure 2, ces orifices 30 sont avantageusement inclinés vers le bas, par exemple à environ 45 degrés, dans la direction de passage du liquide, ce qui évite la création de turbulences.

Dans l'exemple représenté, le diamètre des orifices 30 est constant, mais leur nombre diminue de haut en bas, de façon que la section de passage du liquide à travers la paroi du tube 10 diminue progressivement de haut en bas, afin de maintenir constant, du haut vers le bas, le débit de liquide passant à travers cette section de passage.

Pour déterminer la variation optimale du nombre de ces perçages 30 du haut vers le bas, on procède avantageusement de manière expérimentale. On réalise pour ceci une maquette en matériau transparent, par exemple en "plexiglass", et on visualise le courant liquide en y ajoutant de la poudre d'aluminium et en l'éclairant. Le nombre de trous 30 et leur emplacement sont alors ajustés expérimentalement de façon à obtenir l'écoulement liquide le plus exempt de perturbations possible.

Le fonctionnement du dégazeur de la figure 1 est le suivant :
Le liquide électrolytique chargé de bulles de gaz, par exemple le catholyte chargé de bulles d'hydrogène en sortie des compartiments cathodiques de l'électrolyseur, est introduit dans l'axe du dégazeur et à sa partie supérieure par la conduite coudée 6. Il tombe alors sur la plaque horizontale 11 pour se propager vers ses bords, ce qui entraîne déjà l'évacuation vers l'orifice de sortie des gaz 6 des plus grosses bulles de gaz, c'est-à-dire d'environ 90 à 95 % des bulles de gaz contenues dans le liquide électrolytique.

Le liquide chargé des 5 à 10 % de bulles restantes tombe alors dans le réservoir où il s'intègre, au niveau de la surface 12, au volume liquide qu'il contient. Il descend alors, comme indiqué par les flèches en traits pleins sur la figure 1, dans l'intervalle laissé entre la pile 13 et l'enceinte 1 et est mis en circulation, dans chaque compartiment 23, de la périphérie vers le centre (voir aussi la figure 2). La courbure hyperbolique des plateaux 14 assure une section de passage constante du liquide dans chaque compartiment 23, et donc une vitesse constante, ce qui, comme on l'a vu précédemment, évite la formation de remous. Le gaz s'accumule dans les poches 26 et en sort continûment par les entrées 24 sous forme de grosses bulles 28 qui montent vers la surface 12 pour s'intégrer au volume de gaz se trouvant au-dessus et être finalement évacué en 6 vers le dispositif de lavage des gaz (non représenté).

Le liquide dégazé sort de chaque compartiment par les orifices 22, traverse le tube de répartition 10 par les orifices 30, et sort finalement en 9 par la base du dégazeur en direction du circuit de recyclage de l'électrolyte vers les entrées de l'électrolyseur.

Les vitesses de propagation du liquide dans les compartiments 23 étant relativement lentes, de nombreuses impuretés se déposent dans le fond de ceux-ci, de sorte qu'il faut nettoyer les plateaux périodiquement. Pour ceci, on procède au démontage complet du dégazeur de la façon suivante : Après avoir déconnecté le dégazeur et l'avoir vidé de son contenu liquide, on retire le tube cylindrique 3 en le soulevant après avoir enlevé les vis 5. On dévisse et on retire la plaque 11, on dévisse et on retire l'écrou 16, puis le joint élastique 15. On retire alors les plateaux 14 un par un, on les nettoie, puis on effectue le remontage de l'ensemble en ordre inverse. L'épaulement 21 (figure 3) garantit le centrage correct des plateaux l'un sur l'autre.

L'invention n'est évidemment pas limitée à l'exemple de réalisation qui vient d'être décrit. Bien que la forme circulaire soit préférentielle pour les plateaux, pour des raisons bien compréhensives de facilité de fabrication, ceux-ci pourraient aussi bien avoir une autre forme, par exemple polygonale. L'enceinte pourrait comporter plusieurs piles de plateaux au lieu d'une, dont les sorties seraient avantageusement réunies dans l'enceinte ou à l'extérieur. Elle pourrait aussi ne pas avoir une forme allongée dans le sens vertical, si l'on renonçait à s'en servir comme vase d'expansion. En outre, au lieu d'entrer à la périphérie dans chaque pile de plateaux et de sortir dans le canal central, on pourrait au contraire entrer par le canal central et sortir par la périphérie.

8

**0147320**

1.- Dégazeur pour installation d'électrolyse, du type comportant une enceinte démontable (1) munie d'au moins une entrée (7) pour le liquide électrolytique chargé de gaz, d'au moins une sortie (9) pour le liquide dégazé, et d'au moins une sortie (6) pour le gaz extrait, ladite enceinte contenant, en retrait par rapport à sa paroi intérieure, au moins une pile (13) de plateaux (14) agencés de manière à former des compartiments superposés (23), chaque pile étant immergée dans le liquide électrolytique, et chaque compartiment étant muni d'au moins un orifice amont (24) d'entrée de liquide chargé de gaz, et d'au moins un orifice aval (22) de sortie de liquide dégazé,

caractérisé en ce que ladite pile est constituée, à la manière d'une pile d'assiettes, de plateaux séparables posés l'un sur l'autre, chaque plateau (14)étant percé d'un trou central (17) de manière à ce que la pile, une fois constituée, soit percée d'un canal vertical (18) la traversant axialement du haut en bas, et chaque plateau (14) étant par ailleurs muni de rebords, respectivement extérieur (19) et intérieur (20) laissant pour chaque compartiment (23) au moins une ouverture périphérique vers l'extérieur (24) et au moins une ouverture centrale (22) dans ledit canal,

et en ce qu'il est équipé de moyens pour faire circuler du liquide électrolytique, dans chaque compartiment (23), entre au moins une ouverture périphérique (24) et au moins une ouverture centrale (22), ou vice-versa.

2.- Dégazeur selon la revendication 1, caractérisé en ce que chacun desdits plateaux (14) a une forme galbée avec concavité dirigée vers le bas.

3.- Dégazeur selon la revendication 2, caractérisé en ce que la courbure de chaque plateau (14) est choisie telle que la section (S) de passage radial du liquide électrolytique, dans le compartiment (23) qu'il définit avec le plateau supérieur, soit constante.

4.- Dégazeur selon l'une quelconque des revendications 1 à 3, caractérisé en ce que lesdits plateaux (14) ont chacun une forme annulaire.

5.- Dégazeur selon la revendication 4, caractérisé en ce que chacun desdits plateaux (14) est équipé d'un déflecteur tronconique (27) placé autour de son rebord intérieur (20) et s'étendant vers le bas.

6.- Dégazeur selon l'une quelconque des revendications 1 à 5, caractérisé en ce que ladite enceinte (1) a une forme allongée dans le sens vertical.

0147320

7.- Dégazeur selon la revendication 6, caractérisé en ce que ladite enceinte (1) est tubulaire et contient une seule pile de plateaux (14) placée selon son axe longitudinal.

8.- Dégazeur selon l'une quelconque des revendications 1 à 7, caractérisé en ce qu'il comporte en outre un tube (10) de répartition de débit de liquide situé dans ledit canal de manière coaxiale à celui-ci.

9.- Dégazeur selon la revendication 7, du type selon lequel le liquide circule dans les compartiments (23) de la périphérie vers le centre et dans le canal central du haut vers le bas, caractérisé en ce que les orifices (30) de passage du liquide à travers le tube de répartition (10) sont inclinés vers le bas dans la direction de passage du flux de liquide.

10.- Dégazeur selon la revendication 8, du type selon lequel le liquide circule dans les compartiments de la périphérie vers le centre et dans le canal central du haut vers le bas, ou dégazeur selon la revendication 9, caractérisé en ce que les orifices (30) de passage du liquide à travers le tube de répartition sont percés de manière à ce que la section de passage du liquide à travers la paroi dudit tube diminue progressivement du haut vers le bas de manière à maintenir constant, du haut vers le bas, le débit de liquide passant à travers ladite section de passage.

0147320

Fig.1

Fig. 2

2/3

0147320

0147320

Fig. 3